# EUROPEAN PATENT SPECIFICATION

(11) **EP 2 525 108 B1**
(45) Date of publication and mention of the grant of the patent: **16.07.2014**
(21) Application number: 11305620.4
(22) Date of filing: 20.05.2011
(51) Int. Cl.: F16C 19/18, F16C 33/66, F16C 33/78, F01D 25/16, F01D 25/18, F02C 6/12

(54) **Turbocharger, notably for a combustion engine**
Turbolader, insbesondere für einen Verbrennungsmotor
Turbocompresseur, notamment pour moteur à combustion

(43) Date of publication of application: 21.11.2012
(73) Proprietor: Aktiebolaget SKF, 415 50 Göteborg (SE)
(72) Inventor: Viault, Samuel, 37540 Saint Cyr Sur Loire (FR); Wensing, Jeoren, 3991 WP Houten (NL); Berruet, Nicolas, 37360 Neuille-Pont-Pierre (FR); Corbett, Richard, 37230 Fondettes (FR)
(74) Representative: Dossmann, Gérard

(56) References cited:
- EP-A1- 1 719 927
- EP-A2- 0 248 572
- EP-A2- 2 042 758
- GB-A- 1 430 864
- JP-A- 2007 009 702

## Description

The present invention relates to the field of turbochargers, and in particular those used in combustion engines for automotive vehicles.

Such a turbocharger is known from GB 1430864A.

In such application, a turbocharger is used to enhance the combustion engine performance by blowing compressed air into the cylinders of said engine.

A turbocharger generally comprises a housing, a shaft extending through an opening formed on the housing, a turbine wheel mounted on a first end portion of the shaft and located in an exhaust gases passage of the combustion engine, a compressor wheel mounted on an opposite second end portion of said shaft and located in an admission gases passage of the engine, and rolling bearings disposed between the shaft and the housing. When the turbine wheel is rotated by the flow of the exhaust gases, the shaft and the compressor wheel are rotated which leads to a compression of the admission gases introduced into the cylinders of the combustion engine.

The engine oil may be used for the lubrication of the rolling bearings. However, when the combustion engine stops, the delivery of engine oil is shut off. This causes a strong temperature increase of the residual oil located between the shaft and the rolling bearing near to the turbine wheel. The cooling of said rolling bearing is thus not satisfactory. Otherwise, the engine oil may contain foreign matter, for example small metal particles, thereby causing a premature wear of the rolling bearings.

To overcome these drawbacks, European patent application EP-A2-2 042 758 discloses a turbocharger comprising a tank for storing a specific lubricating oil for the rolling bearings, said tank being formed within the housing. A tube is provided between the storage tank and the space where are housed the rolling bearings to supply by capillary action the lubricating oil.

This leads to a complex structure of the turbocharger as well as an increase of the mounting cost.

One aim of the present invention is therefore to overcome the aforementioned drawbacks.

It is a particular object of the present invention to provide a turbocharger which is simple to manufacture and economic while guaranteeing good sealing properties.

According to an aspect of the present invention, there is provided a turbocharger according to claim 1.

The sealing rings may be annular. Preferably, one of the inner and outer rings comprises two grooves inside which are mounted the sealing rings.

In one embodiment, the rolling bearing further comprises an additional sealing ring disposed radially between the inner and outer rings and axially between radial lateral surfaces of said rings situated on the turbine wheel side and one of said two sealing rings.

Alternatively or in combination, the rolling bearing may further comprise an additional sealing ring disposed radially between the inner and outer rings and axially between radial lateral surfaces of said rings situated on the compressor wheel side and one of said two sealing rings.

Advantageously, the resistance to high temperatures of the lubricant disposed into the closed space located on the turbine wheel side is higher than that of the lubricant disposed into the closed space located on the compressor wheel side.

In one embodiment, the sealing rings are made from metal.

In one embodiment, the turbocharger comprises only one rolling bearing. Preferably, the axial length of the rolling bearing ranges between 60% and 90% of the axial dimension of the housing, and preferably ranges between 70% and 80%.

The present invention and its advantages will be better understood by studying the detailed description of specific embodiments given by way of non-limiting examples and illustrated by the appended drawings on which:
- Figure 1 is an axial section of a turbocharger according to a first example,
- Figure 2 is an axial section of a rolling bearing of the turbocharger of Figure 1,
- Figures 3 to 4 are axial sections of a rolling bearing for a turbocharger according to second and third examples, and
- Figure 5 is an axial section of a rolling bearing for a turbocharger according to an example of the invention.

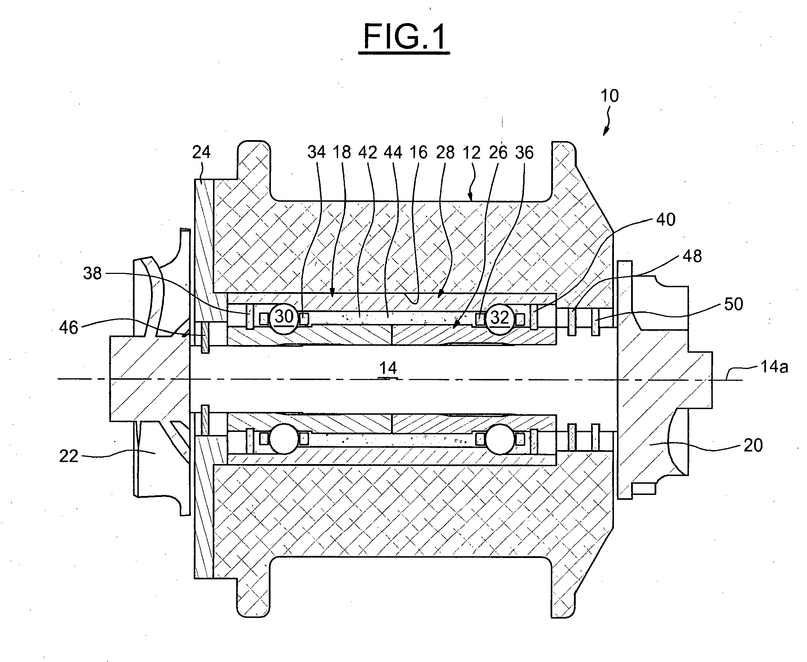

As illustrated on Figure 1, which illustrates an embodiment of a turbocharger 10 according to an example, the turbocharger comprises a housing 12, a shaft 14 extending along a longitudinal axis 14a through a cylindrical bore or opening 16 of the housing, a rolling bearing 18 mounted onto the shaft 14 and disposed into the opening 16, a turbine wheel 20 fixed at one end of the shaft 14 and a compressor wheel 22 fixed at an opposite end of said shaft. The turbocharger 10 also comprises a cap 24 fixed at an axial end of the housing 12. In the disclosed embodiment, the axial length of the rolling bearing 18 ranges between 60% and 90% of the axial dimension of the opening 16 of the housing, and more precisely between 70% and 80%.

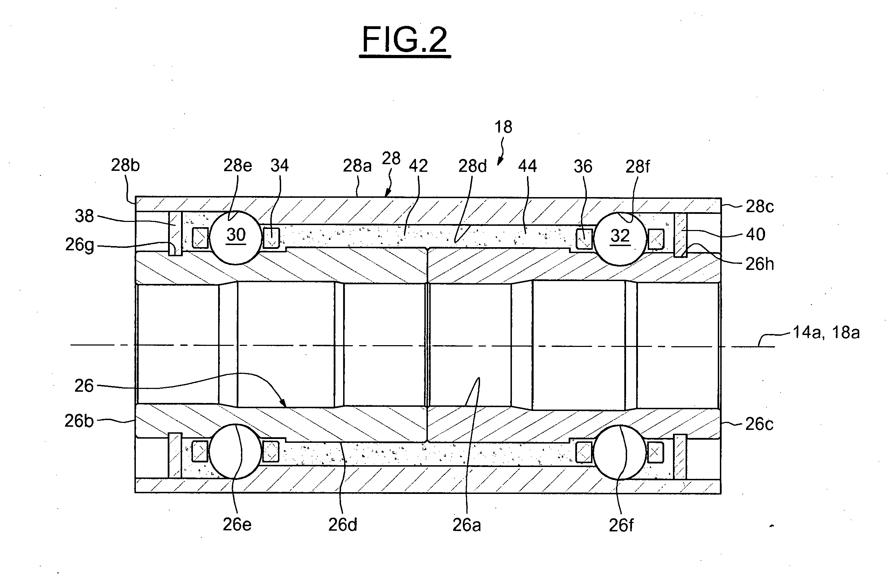

As shown more clearly on Figure 2, the rolling bearing 18 comprises an inner ring 26 and an outer ring 28 between which are housed two rows of rolling elements 30 and 32, which in this case are balls, two annular cages 34, 36 respectively maintaining the circumferential spacing of the rolling elements 30, 32 and two annular sealing rings 38, 40. The axis 18a of the rolling bearing is coaxial with the axis 14a of the shaft of the turbocharger.

The inner and outer rings 26, 28 are concentric and symmetric with respect to a transverse radial plane passing through the centre of the rolling bearing. The rings 26, 28 are of the solid type. A "solid ring" is to be understood as a ring obtained by machining with removal of material (by machining, grinding) from metal tube stock, bar stock, rough forgings and/or rolled blanks.

The outer ring 28 comprises an outer cylindrical surface 28a mounted radially into contact with the opening 16 (Figure 1) of the housing and delimited by opposite radial lateral surfaces 28b, 28c which respectively axially come into contact with the cap 24 and a radial shoulder of the housing 12. The outer ring 28 also comprises a bore 28d of cylindrical shape from which are formed toroidal raceways 28e, 28f having in cross-section a concave internal profile adapted to the rolling elements 30, 32. The raceways 28e, 28f are symmetrical with respect to the transverse radial plane passing through the centre of the rolling bearing.

In the disclosed embodiment, the inner ring 26 is made in two parts which are identical, symmetrical with respect to the transverse radial plane of symmetry of the rolling bearing and mounted axially fixedly one against the other. The inner ring 26 is here composed of two identical half-rings. Alternatively, the inner ring may be made into one part. The inner ring 26 has a bore 26a of cylindrical shape into which the shaft 14 (Figure 1) is mounted. Said bore is delimited by opposite radial lateral surfaces 26b and 26c, which are respectively coplanar with the lateral surfaces 28b, 28c of the outer ring. The radial surface 26c axially bears against a radial shoulder of the shaft 14. The inner ring 26 also comprises an exterior cylindrical surface 26d onto which first and second toroidal circular raceways 26e, 26f are formed. The said raceways have in cross-section a concave internal profile adapted to the rolling elements 30 and 32, the said raceways being directed radially outwards. The raceways 26e, 26f are symmetrical with respect to the transverse radial plane passing through the centre of the rolling bearing.

The inner ring 26 also comprises two annular grooves 26g, 26h formed radially towards the inside from the exterior surface 26d, respectively in the vicinity of the radial surfaces 26b, 26c. The grooves 26g, 26h are symmetrical with one another relative to the transverse radial plane of symmetry of the rolling bearing. Inside the grooves 26g, 26h are fixedly mounted the annular sealing rings 38, 40.

In the disclosed example, the sealing rings 38, 40 are identical to one another and apply a static sealing with the inner ring 26 and a dynamic sealing with the outer ring 28. The sealing rings 38, 40 are made from metal, advantageously from a thin metal sheet blank. Alternatively, the sealing rings may be made by moulding a synthetic material such as an elastomer. The sealing rings 38, 40 are continuous in the circumferential direction. To facilitate their fitting into the grooves 26g, 26h of the inner ring, each of the sealing rings may alternatively be open at a point of its circumference. In the disclosed embodiment, the sealing rings have a flat washer shape. It should be understood that it is possible to foresee a different shape, for example a L-shaped section.

The sealing rings 38, 40 are disposed radially between the inner and outer rings 26, 28. Each sealing ring 38, 40 extends radially towards the outer ring 28 and comes into sliding contact with the bore 28d of said ring. Alternatively, the sealing rings may remain at a small distance from said bore. The sealing ring 38 is axially situated on the compressor wheel side and the sealing ring 40 on the turbine wheel side.

The sealing ring 38 is located axially between the row of rolling elements 30 and the radial surfaces 26b, 28b of the inner and outer rings, the sealing ring 40 being mounted axially between the row of rolling elements 32 and the radial surfaces 26c, 28c of said rings. A closed space 42 is defined between the rings 26, 28 and the sealing rings 38, 40 in which the rolling elements 30, 32 and the associated cages 34, 36 are housed so as to be protected against external polluting elements. The closed space 42 is delimited radially by the exterior surface 26d of the inner ring and the bore 28d of the outer ring, and axially by the radial sealing rings 38, 40. The closed space 42 is advantageously filled with a lubricant 44, such as grease, to increase the overall sealing of the rolling bearing. The sealing rings 38, 40 have a dual function, namely to prevent ingress of undesirable external polluting elements into the rolling bearing 18 and to keep the lubricant 44 inside the closed space 42 to obtain a sealed rolling bearing 18 with its own lubricant.

As shown on Figure 1, the turbocharger 10 is further provided with a sealing ring 46 mounted radially between the shaft 14 and the cap 24 and axially disposed between the compressor wheel 22 and the rolling bearing 18, and with two sealing rings 48, 50 disposed radially between the shoulder of said shaft 14 and the opening 16 of housing and axially mounted between the rolling bearing 18 and the turbine wheel 20. The sealing rings 46 to 50 are fitted into grooves (not referenced) provided on the exterior surface of the shaft 14 and come into sliding contact with the cap 24 or the housing 12. The sealing rings 46 to 50 may be made from metal.

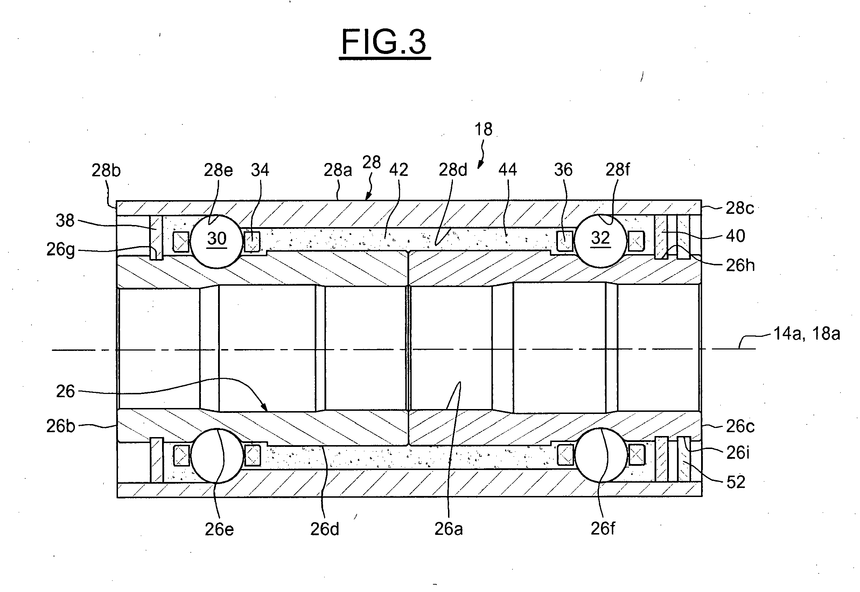

As shown on Figure 3, in which identical parts are given identical references, the rolling bearing 18 of the turbocharger may further comprise an additional sealing ring 52 disposed radially between the inner and outer rings 26, 28 and axially between the radial surfaces 26c, 28c of said rings situated on the turbine wheel side and the sealing ring 40. The sealing ring 52 is fitted into an annular groove 26i formed on the exterior surface 26d of the inner ring, extends radially towards the outer ring 28 and comes into sliding contact with the cylindrical bore 28d of said ring. The sealing ring 52 is made from metal or synthetic material.

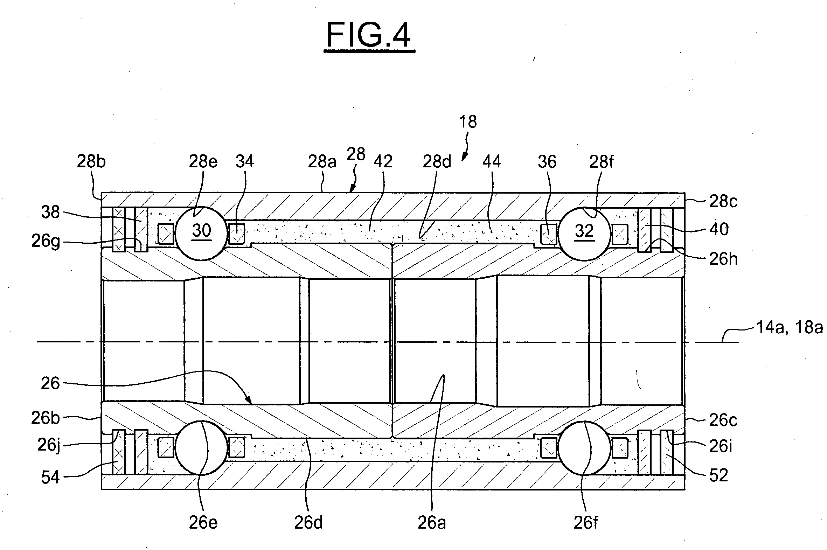

Alternatively, as shown on Figure 4, the rolling bearing 18 of the turbocharger further comprises an additional sealing ring 54 disposed radially between the inner and outer rings 26, 28 and axially between the radial surfaces 26b, 28b of said rings situated on the compressor wheel side and the sealing ring 38. The sealing ring 54 is fitted into an annular groove 26j formed on the exterior surface 26d of the inner ring. The sealing rings 52, 54 are identical and symmetrical with one another relative to the transverse radial plane passing through the centre of the rolling bearing.

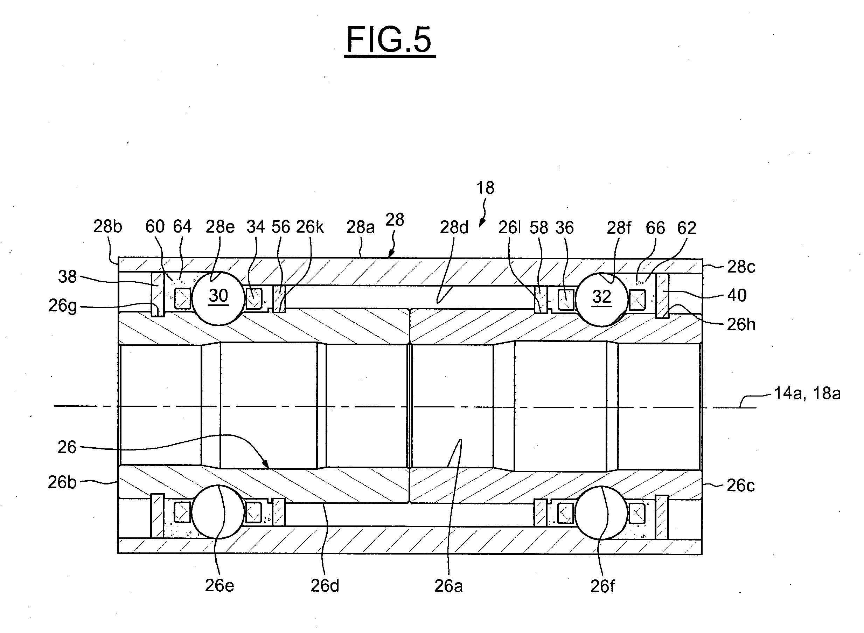

The rolling bearing 18 of the turbocharger disclosed in the embodiment shown on Figure 5, in which identical parts are given identical references, differs from the first example in that it further comprises inner sealing rings 56, 58 disposed radially between the inner and outer rings 26, 28 and each delimiting together with said rings and the corresponding outer sealing ring 38, 40 a closed space 60, 62 for each row of rolling elements 30, 32. The sealing rings 56, 58 are identical to one another and apply a static sealing with the inner ring 26 and a dynamic sealing with the outer ring 28. The sealing ring 56, 58 are made from metal, advantageously from a thin metal sheet blank. Alternatively, the sealing rings may be made by moulding a synthetic material such as elastomer. The sealing rings 56, 58 are continuous in the circumferential direction. To facilitate their mounting, each of the sealing rings may alternatively be open at a point of its circumference.

The sealing ring 56 is disposed near the cage 34 axially on the opposite side to the sealing ring 38 with regard to the row of rolling elements 30. The sealing ring 56 is fitted into an annular groove 26k provided on the exterior surface 26d of inner ring, extends radially towards the outer ring 28 and comes in sliding contact with the bore 28d of said ring. Alternatively, the sealing ring 56 may remain at a small distance from said bore. The axial distance between the inner sealing ring 56 and the row of rolling elements 30 is substantially equal to the one between said row and the outer sealing ring 38. The sealing ring 58 is fitted into a groove 261 provided on the exterior surface 26d of the inner ring and is symmetrical to the sealing ring 56 with regard to the radial transverse plane passing through the centre of the rolling bearing.

For each row of rolling elements 30 and 32, there is a sealing ring on each of the opposite sides of said row in order to close the radial space existing between the inner and outer ring and to define the associated closed space 60, 62 in which said row of rolling elements and the associated cage are housed. For each row of rolling elements 30 and 32, one sealing ring is positioned axially on the opposite side to the other with regard to said row. Each closed space 60, 62 is filled with a lubricant 64, 66. For each row of rolling elements 30 and 32, the associated sealing rings 38, 56 and 40, 58 prevent ingress of foreign matter and keep the lubricant inside the space where said rolling elements contact the raceways of the inner and outer rings. With such an embodiment, the quantity of lubricant into the rolling bearing 18 is reduced around 50% with regard to the previous examples. Besides, the lubricants 64, 66 may be different from each other. Advantageously, the lubricant 66 disposed into the closed space 62 axially located on the side of the turbine wheel has a resistance to high temperatures higher than the one of the lubricant 64. "High temperatures" are to be understood as temperatures at which is exposed the turbine wheel driven by the exhaust gases. These temperatures may reach for instance 1000° C.

In another variant, it may also be possible to foresee, with such a rolling bearing having a closed space for each row of rolling elements, an additional sealing ring as disclosed in example shown on Figure 3 and/or an additional sealing ring as disclosed in example shown on Figure 4.

In the illustrated embodiments, each of the sealing rings is mounted on the inner ring of the rolling bearing. Alternatively, the sealing rings may be disposed on the outer ring and thus apply a static sealing with said ring and a dynamic sealing with the inner ring. The invention applies not only to turbocharger comprising an angular contact ball rolling bearing with a double rows of balls but also to turbocharger comprising other types of rolling bearing, for example rolling bearing having four points contact and/or with at least three rows of balls.

## Claims

1. Turbocharger comprising a shaft (14), a housing (12), a turbine wheel (20) and a compressor wheel (22) mounted onto the shaft, and at least a rolling bearing (18) disposed between the shaft and the housing and comprising an inner ring (26), an outer ring (28) and at least two rows of rolling elements (30, 32) disposed between the rings, **characterized in that** said rolling bearing further comprises, for each row of rolling elements (30, 32), at least two sealing rings (38, 56, 40, 58) disposed radially between the inner and outer rings on both sides of each row of rolling elements and delimiting together with said rings a closed space (60, 62) inside which each said row of rolling elements is housed, each closed space (60, 62) being filled with a lubricant (64, 66), the lubricants (64, 66) being different from each other.

2. Turbocharger according to claim 1, wherein the sealing rings (38, 56, 40, 58) are annular.

3. Turbocharger according to claims 1 or 2, wherein one of the inner and outer rings comprises four grooves (26g, 26h, 26k, 261) inside which are mounted the sealing rings (38, 40, 56, 58).

4. Turbocharger according to any of the preceding claims, wherein the rolling bearing further comprises an additional sealing ring (52) disposed radially between the inner and outer rings (26, 28) and axially between radial lateral surfaces (26c, 28c) of said rings situated on the turbine wheel side and one of said two sealing rings (38, 40).

5. Turbocharger according to any of the preceding claims, wherein the rolling bearing further comprises an additional sealing ring (54) disposed radially between the inner and outer rings (26, 28) and axially between radial lateral surfaces (26b, 28b) of said rings situated on the compressor wheel side and one of said two sealing rings (38, 40).

6. Turbocharger according to any of the preceding claims, wherein the resistance to high temperatures of the lubricant (66) disposed into the closed space (62) located on the turbine wheel (20) side is higher than that of the lubricant (64) disposed into the closed space (60) located on the compressor wheel side.

7. Turbocharger according to any of the preceding claims, wherein the sealing rings are made from metal.

8. Turbocharger according to any of the preceding claims, comprising only one rolling bearing (18).

9. Turbocharger according to claim 8, wherein the axial length of the rolling bearing (18) ranges between 60 % and 90 % of the axial dimension of the housing (12), and preferably ranges between 70% and 80%.

## Patentansprüche

1. Turbolader, der eine Welle (14), ein Gehäuse (12), ein Turbinenrad (20) und ein Verdichterrad (22), die auf der Welle montiert sind, sowie mindestens ein Wälzlager (18) umfasst, das sich zwischen der Welle und dem Gehäuse befindet und einen Innenring (26), einen Außenring (28) sowie mindestens zwei Reihen Wälzkörper (30, 32) umfasst, die sich zwischen den Ringen befinden, **dadurch gekennzeichnet, dass** das Wälzlager weiterhin für jede Reihe Wälzkörper (30, 32) mindestens zwei Dichtringe (38, 56, 40, 58) umfasst, die sich radial zwischen den Innen- und Außenringen auf beiden Seiten einer jeden Reihe Wälzkörper befinden und zusammen mit den Ringen einen geschlossenen Raum (60, 62) begrenzen, in dem jede der Reihen Wälzkörper untergebracht ist, wobei jeder geschlossene Raum (60, 62) mit einem Schmiermittel (64, 66) befüllt ist und sich die Schmiermittel (64, 66) voneinander unterscheiden.

2. Turbolader nach Anspruch 1, bei dem die Dichtringe (38, 56, 40, 58) ringförmig sind.

3. Turbolader nach Anspruch 1 oder 2, bei dem einer der Innen- und Außenringe vier Nuten (26g, 26h, 26k, 261) umfasst, in denen die Dichtringe (38, 40, 56, 58) montiert sind.

4. Turbolader nach einem der vorstehend aufgeführten Ansprüche, bei dem das Wälzlager weiterhin einen zusätzlichen Dichtring (52) umfasst, der sich radial zwischen den Innen- und Außenringen (26, 28) und axial zwischen radialen Seitenflächen (26c, 28c) der Ringe auf der Turbinenradseite und einem der zwei Dichtringe (38, 40) befindet.

5. Turbolader nach einem der vorstehend aufgeführten Ansprüche, bei dem das Wälzlager weiterhin einen zusätzlichen Dichtring (54) umfasst, der sich radial zwischen den Innen- und Außenringen (26, 28) und axial zwischen radialen Seitenflächen (26b, 28b) der Ringe auf der Verdichterseite und einem der zwei Dichtringe (38, 40) befindet.

6. Turbolader nach einem der vorstehend aufgeführten Ansprüche, bei dem die Hochtemperaturbeständigkeit des Schmiermittels (66), das sich im geschlossenen Raum (62) auf der Seite des Turbinenrads (20) befindet, höher als diejenige des Schmiermittels (64) ist, das sich im geschlossenen Raum (60) auf der Verdichterradseite befindet.

7. Turbolader nach einem der vorstehend aufgeführten Ansprüche, bei dem die Dichtringe aus Metall bestehen.

8. Turbolader nach einem der vorstehend aufgeführten Ansprüche, der nur ein Wälzlager (18) umfasst.

9. Turbolader nach Anspruch 8, bei dem die axiale Länge des Wälzlagers (18) in einem Bereich von 60% bis 90% der axialen Abmessung des Gehäuses (12) und vorzugsweise in einem Bereich von 70% bis 80% liegt.

## Revendications

1. Turbocompresseur comprenant un arbre (14), un boîtier (12), une roue de turbine (20) et une roue de compresseur (22) montées sur l'arbre, et au moins un roulement (18) disposé entre l'arbre et le boîtier et comprenant une bague intérieure (26), une bague extérieure (28) et au moins deux rangées d'éléments roulants (30, 32) disposés entre les bagues, **caractérisé en ce que** ledit roulement comprend en outre, pour chaque rangée d'élément roulants (30, 32), au moins deux bagues d'étanchéité (38, 56, 40, 58) disposées radialement entre les bagues intérieure et extérieure des deux côtés de chaque rangée d'éléments roulants et délimitant avec lesdits bagues un espace fermé (60, 62) à l'intérieur duquel est logée chacune desdites rangées d'éléments roulants, chaque espace fermé (60, 62) étant rempli d'un lubrifiant (64, 66), les lubrifiants (64, 66) étant différents l'un de l'autre.

2. Turbocompresseur selon la revendication 1, dans lequel les bagues d'étanchéité (38, 56, 40, 58) sont annulaires.

3. Turbocompresseur selon la revendication 1 ou 2, dans lequel l'une des bagues intérieure et extérieure comprend quatre rainures (26g, 26h, 26k, 261) à l'intérieur desquelles sont montées les bagues d'étanchéité (38, 40, 56, 58).

4. Turbocompresseur selon l'une quelconque des revendications précédentes, dans lequel le roulement comprend en outre une bague d'étanchéité supplémentaire (52) placée radialement entre les bagues intérieure et extérieure (26, 28) et axialement entre des surfaces radiales latérales (26c, 28c) desdites bagues situées du côté de la roue de turbine et de l'une desdites deux bagues d'étanchéité (38, 40).

5. Turbocompresseur selon l'une quelconque des revendications précédentes, dans lequel le roulement comprend en outre une bague d'étanchéité supplémentaire (54) placée radialement entre les bagues intérieure et extérieure (26, 28) et axialement entre des surfaces radiales latérales (26b, 28b) desdites bagues situées du côté de la roue de compresseur et de l'une desdites deux bagues d'étanchéité (38, 40).

6. Turbocompresseur selon l'une quelconque des revendications précédentes, dans lequel la résistance aux hautes températures du lubrifiant (66) placé dans l'espace fermé (62) situé du côté de la roue de turbine (20) est supérieure à celle du lubrifiant (64) placé dans l'espace fermé (60) situé du côté de la roue de compresseur.

7. Turbocompresseur selon l'une quelconque des revendications précédentes, dans lequel les bagues d'étanchéité sont en métal.

8. Turbocompresseur selon l'une quelconque des revendications précédentes, comprenant un seul roulement (18).

9. Turbocompresseur selon la revendication 8, dans lequel la longueur axiale du roulement (18) vaut entre 60 % et 90 % de la dimension axiale du boîtier (12), et vaut de préférence entre 70 % et 80 %.
